Europäisches Patentamt

European Patent Office

Office européen des brevets

(11) Veröffentlichungsnummer : **0 163 026**
**B1**

# (12) EUROPÄISCHE PATENTSCHRIFT

(45) Veröffentlichungstag der Patentschrift :
25.05.88

(21) Anmeldenummer : 85103056.9

(22) Anmeldetag : 16.03.85

(51) Int. Cl.⁴ : **A 01 K  5/00**, A 01 D 90/10,
A 01 F 25/20

(54) Verteilungs- und Mischwagen für Silage und anderes Viehfutter.

(30) Priorität : 28.05.84 DE 3419874

(43) Veröffentlichungstag der Anmeldung :
04.12.85 Patentblatt 85/49

(45) Bekanntmachung des Hinweises auf die Patenterteilung : 25.05.88 Patentblatt 88/21

(84) Benannte Vertragsstaaten :
AT BE CH FR GB IT LI LU NL SE

(56) Entgegenhaltungen :
DE-A- 2 364 834
DE-A- 2 621 709
DE-A- 2 834 782
DE-A- 3 033 824
FR-A- 2 449 396
SU-A- 1 066 512

(73) Patentinhaber : **von der Heide, Hans**
**Ibbenbürener Strasse 17**
**D-4533 Laggenbeck (DE)**

(72) Erfinder : **von der Heide, Hans**
**Ibbenbürener Strasse 17**
**D-4533 Laggenbeck (DE)**

(74) Vertreter : **Patentanwälte Schulze Horn und Hoffmeis-**
**ter**
**Goldstrasse 36**
**D-4400 Münster (DE)**

## Beschreibung

Die Erfindung betrifft einen Verteilungswagen für Silage und anderes Viehfutter, mit einem Laderaum für die Silage, der einen als Kratzförderer ausgebildeten Boden aufweist, mit einer an der vorderen Wagenquerseite angeordneten Schneideinrichtung für Silageblöcke, die für das Einkippen eines ausgeschnittenen Silageblocks über den Laderaum hebbar und kippbar ist, mit wenigstens einem den Laderaum an der hinteren Wagenquerseite begrenzenden, die Silage schräg nach oben fördernden Kratzband, welches die Silage an seinem Oberrand abwirft, und mit einem die abgeworfene Silage austragenden, quer zur Fahrtrichtung des Wagens angeordneten Förderband.

Ein derartiger Wagen ist aus EP-A 0 102 406 des Anmelders bekannt. Für den ihm zugedachten Zweck, nämlich die Entnahme von Silageblöcken aus Fahrsilos und das Zerkleinern und Austragen der Silage, ist der Wagen gut geeignet. In der Praxis hat sich jedoch herausgestellt, daß es für bestimmte Mast- und Zuchtbetriebe auch zweckmäßig sein kann, der Silage noch eine zusätzliche Kraftfutterkomponente bzw. Mineralfutter zuzusetzen. Aus DE-A 3 033 824 des Anmelders ist eine hierfür geeignete Vorrichtung zum Abtragen, Laden, Transportieren, Bereiten und Austeilen von Tierfutter bekannt, die u. a. ein zusätzliches Laderaumabteil für ein zum Mischen mit der Silage vorgesehenes Zusatzfutter aufweist. Bei dieser bekannten Vorrichtung fällt das Zusatzfutter unter Förderung durch eine Austragschnecke oder -walze aus dem Laderaumabteil einfach auf ein bei dieser Vorrichtung ebenfalls vorhandenens, die Silage seitlich austragendes Förderband. Als Nachteil hat sich hierbei jedoch herausgestellt, daß eine gleichmäßige Verteilung des Zusatzfutters in der ausgetragenen Silage nicht immer erreicht wird.

Es stellt sich daher die Aufgabe, einen Wagen der eingangs genannten Art zu schaffen, mit dem es möglich ist, der Silage Zusatzfutter in gleichmäßiger Verteilung zuzugeben.

Die Lösung dieser Aufgabe gelingt erfindungsgemäß bei einem Wagen der eingangs genannten Art dadurch, daß der Wagen einen weiteren Laderaum für ein Zusatzfutter aufweist, daß der Laderaum für das Zusatzfutter unten eine Schnecke aufweist, die das Zusatzfutter zu einer Öffnung fördert, von der aus es herabfällt und daß der Wagen unterhalb der Öffnung ein Schleuderrad und ein an dessen der herabfallenden Silage abgewandten Seite angeordnetes Prallblech zur gleichmäßigen Zerstreuung und Eingabe des Zusatzfutters in die auf das Förderband herabfallende Silage aufweist.

Bei diesem Wagen wird vorteilhaft das Zusatzfutter sehr gleichmäßig in die auf das Förderband herabfallende Silage eingegeben. Erreicht wird dies dadurch, daß die einzelnen Partikel des Zusatzfutters durch das Schleuderrad beschleunigt werden und teils auf direktem Wege, teils nach Umlenkung durch das Prallblech breit verteilt und mit unterschiedlichen Geschwindigkeiten in den Schleier der vom Kratzband auf das Förderband herabfallenden Silage eingestreut werden. Hierdurch wird eine gleichmäßige Zusatzfuttereingabe sowohl in Längsrichtung als auch in Querrichtung des Förderbandes und der auf diesem seitwärts ausgetragenen Silage erreicht.

Die Dosierung des der Silage zuzugebenden Zusatzfutters kann zwar grundsätzlich durch die Drehzahl der Schnecke im Laderaum erfolgen, jedoch ist diese Dosierweise relativ ungenau. Vorzugsweise besitzt deshalb der Wagen einen die Durchtrittsgröße der Öffnung des Laderaums für das Zusatzfutter einstellenden Schieber. Hiermit ist eine exakte und einfache Dosierung der Zusatzfutterzugabe möglich.

Zusätzlich kann ein weiterer Behälter vorhanden sein, dessen durch einen Schieber verschließbare untere Öffnung ebenfalls oberhalb des Schleuderrades angeordnet ist und der zur Beimengung von Mineralfutter oder einer anderen weiteren Futterkomponente dient. Da dessen Öffnung ebenfalls über dem Schleuderrad liegt, wird auch das aus diesem Behälter kommende Futter, wie oben beschrieben, gleichmäßig in die Silage eingestreut.

Im folgenden wird ein Ausführungsbeispiel der Erfindung anhand von Zeichnungen näher beschrieben. Es zeigen:

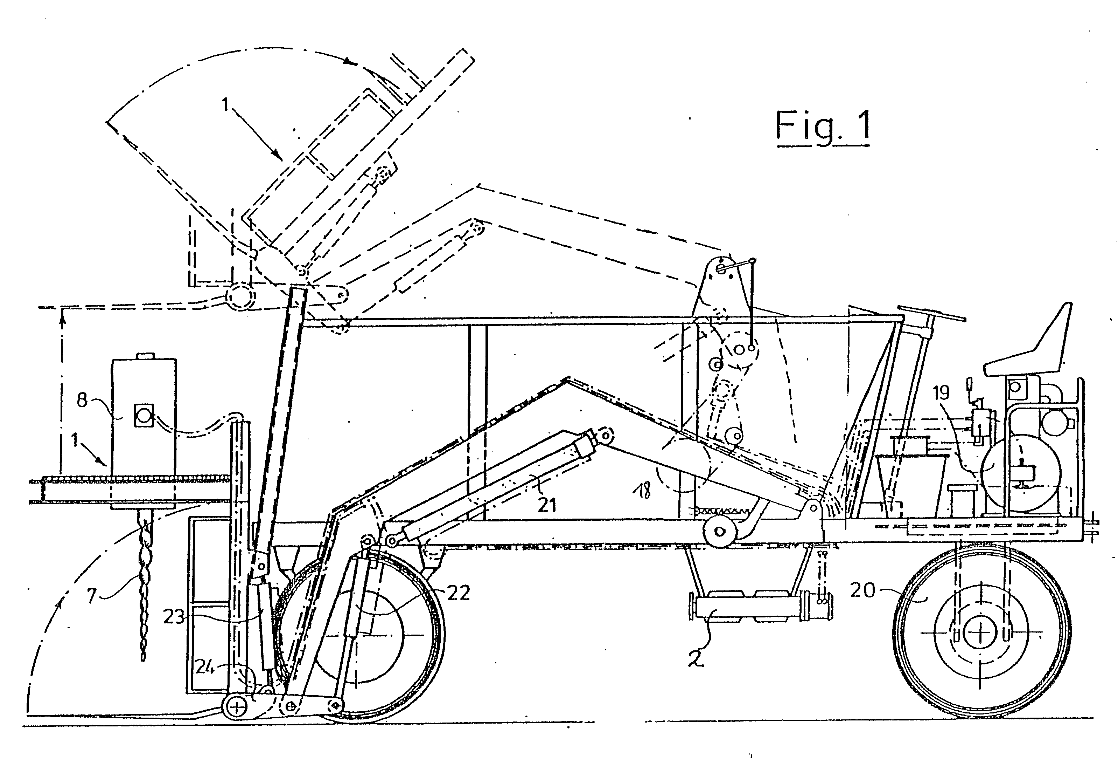

Figur 1 die Seitenansicht eines Wagens gemäß der Erfindung,

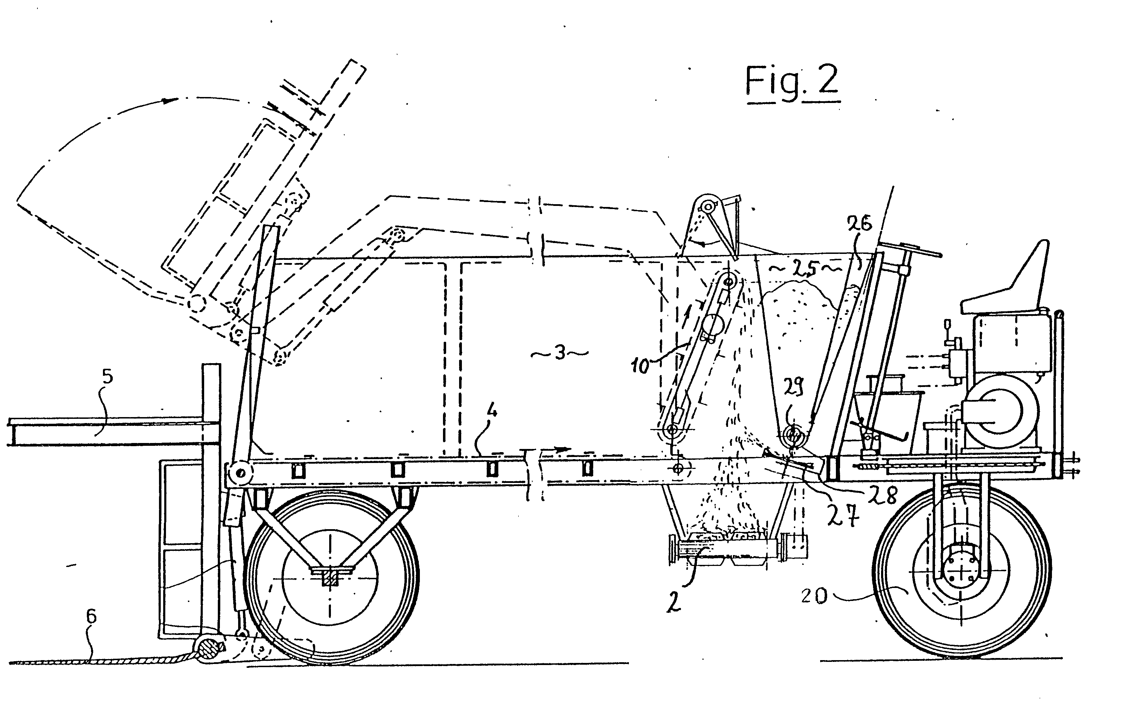

Figur 2 einen Längsschnitt durch einen Wagen gemäß der Erfindung,

Figur 3 das zur Verteilung dienende Schleuderrad mit dem dahinter angeordneten Prallblech und

Figur 4 einen Schnitt durch den Behälter für das Zusatzfutter oberhalb der darin rotierenden Förderschnecke.

Gemäß den Figuren weist der erfindungsgemäße Verteilungs- und Mischwagen für Silage und dergleichen einen Laderaum 3 auf, der mit einem als Kratzförderer ausgebildeten Boden 4 ausgestattet ist. Ein Silageschneidgerät 1, 5, 6 wirft geschnittene Silageblöcke über Kopf in diesen Laderaum 3. Durch den Kratzboden 4 wird die Silage unter Auflockerung vor einem Kratzband 10 gestaut, welches die Silage nach oben fördert und aufgrund seiner Schrägstellung in Form eines Schleiers auf ein seitlich austragendes, quer zur Fahrtrichtung des Wagens verlaufendes Förderband 2 abwirft.

Das Förderband 2 kann je nach Bedarf umgesteuert und sowohl rechts als auch links aus dem Wagen vorgeschoben werden und wirft die Silage bzw. das Mischfutter direkt in Trogrinnen ab. Die Fahrgeschwindigkeit des Wagens ergibt dabei die gewünschte Dosierung.

Der Aufnahme- und Verteilungswagen ist in seinen Grundzügen in der EP-A-0 102 406 offenbart und braucht daher nicht näher beschrieben zu werden. Auf die Beschreibung der genannten europäischen Patentanmeldung wird ausdrücklich Bezug genommen.

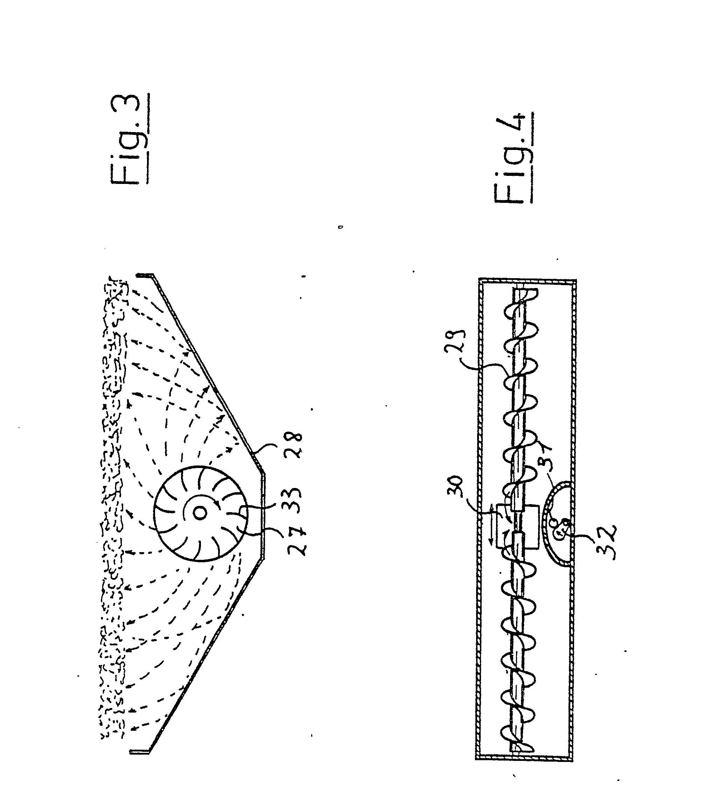

Gegenüber dem Grundmuster des Verteilungswagen weist der erfindungsgemäße Wagen einen zusätzlichen Laderaum für z. B. Kraftfutter auf, der schräg nach unten zusammenlaufende Wände besitzt und in dem in der untersten Mulde eine Schnecke 29 (Figur 4) verläuft, die derart gewendelt ist, daß sie von beiden Seiten die Förderung des Futters zu einer mittigen Öffnung 30 vornimmt, deren Durchtrittsgröße durch einen Schieber zur Futterdosierung eingestellt werden kann. Soll viel Kraftfutter zugegeben werden, wird die Öffnung weiter geöffnet; für die Zugabe von wenig Kraftfutter wird sie wieder verkleinert.

Innerhalb des weiteren Laderaums 25 ist ein dritter Laderaum bzw. Behälter 26 angeordnet, der z. B. Mineralfutter aufnehmen kann. Durch Verdrehen eines Schiebers 32 kann die untere Öffnung 31 des Raumes 26 vergrößert, verkleinert oder ganz geschlossen werden, so daß damit die Zugabe einer dritten Futterkomponente eingestellt werden kann.

Das Futter aus den Laderäumen 25 und 26 fällt auf ein Schleuderrad 27 mit darauf angeordneten Rippen 33 und wird von diesem mittels eines seitlich davon angeordneten Prallblechs 28 gleichmäßig in den Schleier der herabfallenden Silage eingestreut. Dadurch ergibt sich eine ideale Mischung der Silage mit dem Zusatzfutter bzw. den Zusatzfutterkomponenten, wobei die Form des Prallblechs für den Fachmann selbstverständlich derart gewählt wird, daß auch die äußeren Silagestreifen mit einer ausreichenden Zusatzfuttermenge versehen werden. Da das Futter sich auf dem Förderband 2 sammelt, wird die Durchmengung der Futterkomponenten noch verbessert und es wird so sichergestellt, daß beim Überfahren der Tröge das Futter in der gewünschten Zusammensetzung und in gleichmäßiger Verteilung abgeworfen werden kann. :

**Patentansprüche**

1. Aufnahme- und Verteilungswagen für Silage und anderes Viehfutter, mit einem Laderaum (3) für die Silage, der einen als Kratzförderer ausgebildeten Boden (4) aufweist, mit einer an der vorderen Wagenquerseite angeordneten Schneideinrichtung (1, 5, 6) für Silageblöcke, die für das Einkippen eines ausgeschnittenen Silageblocks über den Laderaum hebbar und kippbar ist, mit wenigstens einem den Laderaum an der hinteren Wagenquerseite begrenzenden, die Silage schräg nach oben fördernden Kratzband (10), welches die Silage an seinem Oberrand abwirft, und mit einem die abgeworfene Silage austragenden, quer zur Fahrtrichtung des Wagens angeordneten Förderband (2), dadurch gekennzeichnet, daß der Wagen einen weiteren Laderaum (25) für ein Zusatzfutter aufweist, daß der Laderaum (25) für das Zusatzfutter unten eine Schnecke (29) aufweist, die das Zusatzfutter zu einer Öffnung (30) fördert, von der aus es herabfällt und daß der Wagen unterhalb der Öffnung (30) ein Schleuderrad (27) und ein an dessen der herabfallenden Silage abgewandten Seite angeordnetes Prallblech zur gleichmäßigen Zerstreuung und Eingabe des Zusatzfutters in die auf das Förderband (2) herabfallende Silage aufweist.

2. Aufnahme- und Verteilungswagen nach Anspruch 1, gekennzeichnet durch einen die Durchtrittsgröße der Öffnung (30) des Laderaums (25) für das Zusatzfutter einstellenden Schieber.

3. Aufnahme- und Verteilungswagen nach den Ansprüchen 1 und 2, gekennzeichnet durch einen weiteren Behälter (26) für Mineralfutter, dessen durch einen Schieber (22) verschließbare untere Öffnung (31) ebenfalls oberhalb des Schleuderrades (27) angeordnet ist.

**Claims**

1. A receiving and distributing vehicle for silage and other cattle fodder, comprising a loading chamber (3) for the silage and having a floor (4) in the form of a scraper conveyor and a device (1, 5, 6) for cutting silage blocks disposed at the front transverse side of the vehicle and adapted to be raised above the loading chamber and tilted in order to tip a cut block of silage into the chamber, and at least one scraper belt (10) which bounds the loading chamber at the rear transverse side of the vehicle and conveys the silage obliquely upwards and ejects it at its upper edge, and a conveyor belt (2) disposed transversely to the direction of motion of the vehicle and delivering the ejected silage, characterised in that the vehicle has an additional loading chamber (25) for an addittional feed, the loading chamber (25) for the additional feed has a screw (29) underneath for conveying the additional feed to an opening (30) from which it falls out, and the vehicle has a fan blower (27) below the opening (30) and a baffle plate disposed on the side of the blower remote from the falling silage so that the additional feed is uniformly distributed and introduced into the silage falling on to the conveyor belt (2).

2. A receiving and distribution vehicle according to claim 1, characterised by a slide valve for adjusting the area of the opening (30) of the loading chamber (25) for the additional feed.

3. A vehicle according to claims 1 and 2, characterised by an additional container (26) for mineral feed and having a bottom opening (31) closable by a slide valve (26) and likewise disposed above the fan blower (27).

**Revendications**

1. Véhicule pour prélever et distribuer du fourrage ensilé et autres aliments pour le bétail, comportant : un espace de chargement (3) pour le fourrage ensilé, cet espace présentant un fond (4) aménagé en transporteur à racloirs ; un dispositif (1, 5, 6) de découpage de blocs de fourrage ensilé, pouvant être levé et basculé au-dessus de l'espace de chargement pour y charger un bloc de fourrage ensilé découpé ; au moins une bande à racloirs (10) bordant l'espace de chargement en son côté transversal arrière et transportant le fourrage ensilé obliquement, vers le haut, et l'éjectant en son bord supérieur ; et une bande transporteuse (2) disposée transversalement à la direction de la marche du véhicule et déchargeant le fourrage éjecté, caractérisé par le fait que ce véhicule présente un autre espace de chargement (25) pour un aliment supplémentaire, par le fait que cet espace de chargement (25) pour l'aliment supplémentaire présente à sa partie inférieure une vis sans fin (29) qui amène l'aliment supplémentaire à une ouverture (30) d'où il tombe, et par le fait qu'en dessous de cette ouverture (30) le véhicule présente une roue à action centrifuge (27) et, du côté de cette roue éloigné du fourrage ensilé tombant, une tôle déflectrice pour disperser uniformément l'aliment supplémentaire et l'introduire dans le fourrage ensilé tombant sur la bande transporteuse (2).

2. Véhicule de prélèvement et distribution selon revendication 1, caractérisé par un organe coulissant réglant la grandeur du passage offert par l'ouverture (30) de l'espace de chargement (25) pour l'aliment supplémentaire.

3. Véhicule de prélèvement et distribution selon les revendications 1 et 2, caractérisé par un autre récipient (26) pour aliments minéraux, dont l'ouverture inférieure (31) obturable par un organe coulissant (22) est également agencée au-dessus de la roue à action centrifuge (27).

Fig. 1

1

8

1

7

23

24

22

21

18

2

19

20

0 163 026

0 163 026

Fig. 2

20  27  28  26  25  29  10  3  4  2  5  6

Fig.3

Fig.4